# EUROPEAN PATENT APPLICATION

(11) **EP 1 350 813 A1**
(43) Date of publication of application: **08.10.2003**
(21) Application number: 03251811.0
(22) Date of filing: 21.03.2003
(51) Int. Cl.: C08L 95/00

(54) **Polymer-modified asphalt**

(30) Priority: 01.04.2002 US 369187 P
(71) Applicant: ROHM AND HAAS COMPANY, Philadelphia, Pennsylvania 19106-2399 (US)
(72) Inventor: Guilbault, Lawrence James, Boxford, Massachusetts 01921 (US); Lau, Willie, Lower Gwynedd, Pennsylvania 19002 (US); Degrandpre, Mark Peter, Ambler, Pennsylvania 19002 (US)
(74) Representative: Kent, Venetia Katherine

(57) **Abstract**

A polymer-modified asphalt comprising from 0.5% to 10% of a comb copolymer comprising a backbone and at least one graft segment.

## Description

### Background

This invention relates generally to an asphalt composition having improved viscoelastic properties.

Polymers have been reported as asphalt additives, including styrene-butadiene-styrene block copolymers and random acrylic polymers. For example, U.S. Pat. No. 5,266,615 discloses a polymer-modified asphalt containing a random copolymer of acrylate and methacrylate units. This reference does not suggest incorporation of non-random polymers into asphalts.

The problem addressed by this invention is to find an improved polymer-modified asphalt.

### Statement of Invention

The present invention is directed to a polymer-modified asphalt comprising from 0.5% to 10% of a comb copolymer comprising a backbone and at least one graft segment, and to a method for producing the polymer-modified asphalt.

### Detailed Description

All percentages are weight percentages, unless otherwise indicated. The term "(meth)acrylate" as used herein means methacrylate or acrylate. The "backbone" of a polymer chain is a sequence of polymerized monomer units ("monomer residues"), typically attached by covalent bonding. "Non-terminal" monomer units are directly attached to at least two other monomer units, while "terminal" monomer unit reside at the end of the polymer chain and are directly attached to one other monomer unit. A "linear" polymer is a polymer having a backbone that is not branched, or wherein a minor amount of branching has occurred, for example, from hydrogen abstraction. A "branched" polymer is a polymer having a first "backbone segment" that has other backbone segments (i.e., "branches") chemically attached to it through a "non-terminal" atom of the first backbone segment. Typically, this first backbone segment and all of the branches have the same, or similar, composition. A "pendant" group is a group that is attached to the backbone of a polymer, including a group that is actually part of a polymerized monomer unit, e.g., the alkyl group of an alkyl (meth)acrylate. It is also common to refer to large groups (including polymers) compositionally distinct from the backbone polymer and attached to the backbone as "pendant." For example, when a macromonomer is incorporated into a polymer chain by reaction with monomers, the two carbons of its reactive double bond become part of the backbone, while the polymeric chain originally attached to the double bond of the macromonomer becomes a "pendant group."

A "macromonomer" is any low molecular weight water-insoluble polymer or copolymer having at least one terminal functionality capable of covalently bonding with functionality on another polymer or monomer. Preferably, a macromonomer has at least one terminal ethylenically unsaturated group that is capable of being polymerized in a free radical polymerization process. "Water-insoluble" means having a water solubility no greater than 150 millimoles/liter at 25°C to 50°C. "Low molecular weight" means having a degree of polymerization preferably from 10 to 1,000, more preferably from 20 to 1,000, and most preferably from 20 to about 200. "Degree of polymerization" is the number of polymerized monomer units present in the macromonomer. Typically, the macromonomer chain contains ethylenically unsaturated monomers as polymerized units. The term "macromonomer aqueous emulsion" is used herein to describe an aqueous emulsion containing macromonomer dispersed therein.

A "graft segment" is a polymer chain occupying a pendant position along the polymer backbone. A graft segment may include more than one type of monomer residue. The composition of a graft segment is different from the composition of the backbone polymer to which it is attached, in contrast to a "branch segment" of a branched backbone which has a composition which is the same as, or similar to, the branched backbone. A "terminal graft segment" resides at an end of a backbone polymer chain and is chemically attached to that backbone polymer chain. "Graft copolymers" are polymers formed when polymer chains are chemically attached as side chains to a polymeric backbone.

A "comb copolymer," is a type of graft copolymer having a linear, or essentially linear backbone, and graft segments formed by a "macromonomer" attached to the polymer backbone. A "comb copolymer segment" is the "backbone" or the "graft segment" of a comb copolymer. An "aqueous dispersion of a segmental copolymer" or an "aqueous copolymer composition" is an aqueous medium in which are dispersed a plurality of particles of segmental copolymer.

A preferred emulsion method of preparing the comb copolymers of the present invention and their aqueous dispersions includes (a) forming, by polymerization of at least one first ethylenically unsaturated monomer, a macromonomer aqueous emulsion containing one or more water-insoluble particles of macromonomer; (b) forming a monomer composition containing at least one second ethylenically unsaturated monomer; and (c) combining at least a portion of the macromonomer aqueous emulsion and at least a portion of the monomer composition to form a "polymerization reaction mixture," which is polymerized in the presence of an initiator.

Suitable first ethylenically unsaturated monomers include for example (meth)acrylate esters, such as C₁ to C₁₈ normal, branched, or cyclic alkyl esters of (meth)acrylic acid; styrene; alkyl-substituted styrenes; olefinically unsaturated nitriles; olefinically unsaturated halides; vinyl esters of organic acids; N-vinyl compounds; (meth)acrylamide; substituted (meth)acrylamides; hydroxyalkyl(meth)acrylates; amino-substituted (meth)acrylates and (meth)acrylamides; dienes; and vinyl ethers. Optionally, the first ethylenically unsaturated monomer is a functional monomer, e.g., monomers containing hydroxy, amino, amido, aldehyde, ureido, polyether, glycidylalkyl, keto functional groups (acetoacetoxy esters of hydroxyalkyl (meth)acrylates, and allyl alkyl (meth)acrylates), glycidylalkyl (meth)acrylates, phosphonate ester groups or combinations thereof. These functional monomers preferably are present in the macromonomer at a level of from 0.1% to 15% and more preferably from 0.5% to 10%, and most preferably from 1.0 to 3%, based on the total weight of the graft copolymer.

The macromonomer preferably also contains as polymerized units less than 10%, preferably less than 5%, more preferably less than 2%, more preferably less than 1%, and most preferably, no acid containing monomer, based on the total weight of the macromonomer. An "acid containing monomer" is any ethylenically unsaturated monomer that contains one or more acid functional groups or functional groups that are capable of forming an acid (e.g., an anhydride), e.g., carboxylic acid bearing ethylenically unsaturated monomers; (meth)acryloxypropionic acid; sulfonic acid-bearing monomers; phosphoethylmethacrylate; the corresponding salts; or combinations thereof.

In a preferred embodiment of this invention, the macromonomer has 20% to 100%, more preferably from 50 to 100%, more preferably from 70 to 100%, and most preferably, from 90 to 100%, based on total weight of macromonomer, of at least one α-methyl vinyl monomer, provided that, when the amount is less than 100%, the macromer terminates with a residue of an α-methyl vinyl monomer. Suitable α-methyl vinyl monomers include, e.g., methacrylate alkyl esters described herein; hydroxyalkyl methacrylates; glycidylmethacrylate; phenyl methacrylate; methacrylamide; and methacrylonitrile.

One skilled in the art will recognize that there are many ways to prepare the macromonomer useful in the present invention. For example, the macromonomer may be prepared by a high-temperature continuous process such as disclosed in US-A-5,710,227 or EP-A-1,010,706. In a preferred continuous process, a reaction mixture of first ethylenically unsaturated monomers is passed through a heated zone having a temperature of at least 150°C, and more preferably at least 275°C. The heated zone may also be maintained at a pressure above atmospheric pressure (e.g., greater than 3,000 kPa). The reaction mixture optionally contains a solvent such as water, acetone, methanol, isopropanol, propionic acid, acetic acid, dimethylformamide, dimethylsulfoxide, methylethylketone, or combinations thereof. The macromonomer may also be prepared by polymerizing first ethylenically unsaturated monomers in the presence of a free radical initiator and a catalytic metal chelate chain transfer agent by a solution, bulk, suspension, or emulsion polymerization process. Suitable methods for preparing the macromonomer using a catalytic metal chelate chain transfer agent are disclosed in for example U.S. Patent Nos. 4,526,945, 4,680,354, 4,886,861, 5,028,677, 5,362,826, 5,721,330, and 5,756,605; European publications EP-A-0199,436, and EP-A-0196783; and PCT publications WO 87/03605, WO 96/15158, and WO 97/34934.

In a preferred embodiment, the macromonomer is prepared by an aqueous emulsion free radical polymerization process using a transition metal chelate complex. Preferably, the transition metal chelate complex is a cobalt (II) or (III) chelate complex such as, for example, dioxime complexes of cobalt (II), cobalt (II) porphyrin complexes, or cobalt (II) chelates of vicinal iminohydroxyimino compounds, dihydroxyimino compounds, diazadihydroxy-iminodialkyldecadienes, or diazadihydroxyiminodialkylundecadienes, or combinations thereof. These complexes optionally include bridging groups such as BF₂, and optionally are coordinated with ligands such as water, alcohols, ketones, and nitrogen bases such as pyridine. Additional suitable transition metal complexes are disclosed in U.S. Patent Nos. 4,694,054; 5,770,665; 5,962,609; and 5,602,220. A preferred cobalt chelate complex is Co II or Co III (2,3-dioxyiminobutane-BF₂)₂. The spatial arrangements of such complexes are disclosed in EP-A-199436 and U.S. Patent No. 5,756,605. In this embodiment, at least one first ethylenically unsaturated monomer is polymerized in the presence of a free radical initiator and the transition metal chelate according to conventional aqueous emulsion polymerization techniques. This embodiment is preferred because: (i) the macromonomer polymerization can be readily controlled to produce a desired particle size distribution (preferably narrow, e.g., polydispersity less than 2); (ii) additional processing steps, such as isolating the macromonomer as a solid, can be avoided; and (iii) the macromonomer, macromonomer aqueous emulsion, and the graft copolymer can be prepared by consecutive steps in a single reactor.

The polymerization to form the macromonomer is preferably conducted at a temperature of from 20°C to 150°C, and more preferably from 40°C to 95°C. The solids level at the completion of the polymerization is typically from 5% to 70%, and more preferably from 30% to 60%, based on the total weight of the aqueous emulsion. Preferably, the concentration of initiator is from 0.2% to 3%, and more preferably from 0.5% to 1.5%, based on the total weight of monomer. Preferably, the concentration of transition metal chelate chain transfer agent is from 5 ppm to 200 ppm, and more preferably from 10 ppm to 100 ppm, based on the total monomers used to form the macromonomer. The first ethylenically unsaturated monomer, initiator, and transition metal chelate chain transfer agent may be added in any manner known to those skilled in the art, e.g., they may all be present in the aqueous emulsion at the start of the polymerization process (i.e., a batch process). Alternatively, one or more of the components may be gradually fed to an aqueous solution (i.e., a continuous or semi-batch process). In a preferred embodiment, at least a portion of the monomer and transition metal chelate are gradually fed during the polymerization, with the remainder of the monomer and transition metal chelate being present in the aqueous emulsion at the start of the polymerization.

Any suitable free radical initiator may be used to prepare the macromonomer. The initiator is preferably selected based on its solubility in one or more of the other components; half life at the desired polymerization temperature (preferably from about 30 minutes to about 10 hours), and stability in the presence of the transition metal chelate. Suitable initiators include, e.g., azo initiators peroxides and persulphate. Redox initiator systems may also be used, e.g., persulphate or peroxide in combination with a reducing agent, e.g., sodium metabisulfite, sodium bisulfite, sodium formaldehyde sulfoxylate and isoascorbic acid. Metal promoters, e.g., iron, may also optionally be used in such redox initiator systems. Buffers, such as sodium bicarbonate may be used as part of the initiator system. An emulsifier is also preferably present during the aqueous emulsion polymerization process to prepare the macromonomer that is effective in emulsifying the monomers, for example anionic, cationic, or nonionic emulsifiers. Preferably, the emulsifier is anionic. The amount of emulsifier in the aqueous emulsion is preferably from 0.05% to 10%, and more preferably from 0.3% to 3%, based on the total weight of the monomers.

The "macromonomer aqueous emulsion" contains from 20% to 60%, and more preferably from 30% to 50% of at least one water insoluble macromonomer, based on the total weight of macromonomer aqueous emulsion, and may also contain mixtures of macromonomer. Preferably, the macromonomer aqueous emulsion contains less than 5% and more preferably less than 1% of ethylenically unsaturated monomer, based on the total weight of macromonomer aqueous emulsion. The water insoluble macromonomer particles have a particle size chosen such that, upon addition of monomers, particles of graft copolymer having a desired particle size will be formed. For example, the final graft copolymer particle size is directly proportional to the initial particle size of the macromonomer and the concentration of second ethylenically unsaturated monomer, assuming all the particles participate equally in the polymerization. Preferably, the macromonomer particles have a weight average particle size of from 50 nm to 500 nm, and more preferably from 80 nm to 200 nm as measured by Capillary Hydrodynamic Fractionation technique using a Matec CHDF 2000 particle size analyzer equipped with a HPLC type ultra-violet detector. The macromonomer aqueous emulsion may also include emulsifying agents selected to produce the desired particle size. Suitable emulsifying agents include those previously disclosed for use in preparing the macromonomer. The total level of emulsifying agent, based on the total weight of macromonomer is preferably from 0.2% to 5%, more preferably from 0.5% to 2%.

The "monomer composition" useful in the present invention contains at least one kind of second ethylenically unsaturated monomer. In a preferred embodiment, the second ethylenically unsaturated monomer is selected from C₁ to C₁₈ normal or branched alkyl esters of (meth)acrylic acid, styrene, alkyl-substituted styrenes and butadiene. The monomer composition optionally is dissolved or dispersed in an organic solvent and/or water. Preferably, the level of monomer is from 50% to 100%, more preferably from 60 to 90%, and most preferably from 70 to 80%. Examples of organic solvents that may be present include C₆ to C₁₄ alkanes. The organic solvent will be no more than 30%, and more preferably no more than 5%, based on the total weight of the monomer composition.

In addition to water and/or organic solvent, the monomer composition optionally contains monomers containing functional groups, e.g., hydroxy, amino, amido, aldehyde, ureido, polyether, glycidylalkyl, keto groups, phosphonate ester groups or combinations thereof. These monomers are generally present in the monomer composition at a level of from 0.5% to 15%, more preferably from 1% to 3% based on the total weight of the graft copolymer. Examples of functional monomers include ketofunctional monomers; allyl alkyl (meth)acrylates; glycidylalkyl (meth)acrylates. Such functional monomer can provide crosslinking if desired.

In a preferred embodiment, the monomers in the monomer composition are pre-emulsified in water to form a "monomer aqueous emulsion". Preferably, the monomer aqueous emulsion contains monomer droplets having a droplet size from 1 micron to 100 microns, and more preferably from 5 micron to 50 microns. Any suitable emulsifying agent may be used, for example those previously described, to emulsify the monomer to the desired monomer droplet size. Preferably, the level of emulsifying agent, if present, will be from 0.2% to 2% based on the total weight of monomer in the monomer composition.

The macromonomer aqueous emulsion and monomer composition may be combined in various ways to carry out the polymerization, e.g., they may be combined prior to the start of the polymerization reaction to form the polymerization reaction mixture. Alternatively, the monomer composition could be gradually fed into the macromonomer aqueous emulsion, or the macromonomer aqueous emulsion could be gradually fed into the monomer composition. It is also possible that only a portion of the macromonomer aqueous emulsion and/or monomer composition be combined prior to the start of the polymerization with the remaining monomer composition and/or macromonomer aqueous emulsion being fed during the polymerization.

The initiator can also be added in various ways. For example, the initiator may be added in "one shot" to the macromonomer aqueous emulsion, the monomer composition, or a mixture of the macromonomer aqueous emulsion and the monomer composition at the start of the polymerization. Alternatively, all or a portion of the initiator can be co-fed as a separate feed stream, as part of the macromonomer aqueous emulsion, as part of the monomer composition, or any combination of these methods.

The preferred method of combining the macromonomer aqueous emulsion, the monomer composition, and initiator depends on such factors as the desired graft copolymer composition. Distribution of the macromonomer grafts along the backbone can be affected by the concentrations of the macromonomer and the second ethylenically unsaturated monomers. A batch process will afford high concentration of the macromonomer and the second ethylenically unsaturated monomers at the onset of the polymerization whereas a semi-continuous process will maintain a low concentration of the second ethylenically unsaturated monomer. Through the method of combination, it is possible to control, for example: the number of graft segments per polymer chain; the distribution of graft segments in each chain, and the length of the polymer backbone.

Any suitable initiator for emulsion polymerizations is used to polymerize the macromonomer and second ethylenically unsaturated monomer, including those previously described in connection with forming the macromonomer. The selection of the initiator depends on such well-known factors as the initiator's solubility and half life at the desired polymerization temperature (preferably from 30 minutes to 10 hours). Metal promoters and buffers may also be used in combination with the initiator. Controlled Free Radical Polymerization (CFRP) methods such as Atom Transfer Radical Polymerization; or Nitroxide Mediated Radical Polymerization may be used. Preferred initiators include azo initiators. The amount of initiator used will depend on such factors as the copolymer desired and the initiator selected; preferably, from 0.1% to 1% initiator is used, based on the total weight of monomer and macromonomer. The polymerization temperature will depend on the type of initiator chosen and desired polymerization rates. Preferably, the macromonomer and second ethylenically unsaturated monomer are polymerized at a temperature of from 0°C to 150°C, and more preferably from 20°C to 95°C.

The amount of macromonomer aqueous emulsion and monomer composition added to form the polymerization reaction mixture will depend on such factors as the concentrations of macromonomer and second ethylenically unsaturated monomer, and the desired comb copolymer composition. Preferably, the macromonomer aqueous emulsion and monomer composition are added in amounts to provide a comb copolymer containing as polymerized units from 10% to 60%, more preferably from 15% to 50%, and most preferably from 20% to 40% macromonomer, and from 40% to 90%, more preferably from 50% to 85% and most preferably from 60% to 80% second ethylenically unsaturated monomer. Preferably, the process of the present invention does not require neutralization of the monomer, or aqueous graft copolymer composition.

The aqueous graft copolymer composition formed by polymerization of the macromonomer and the ethylenically unsaturated monomer in the monomer composition preferably has a solids level of from 30% to 70% and more preferably from 40% to 60%. The aqueous graft copolymer composition preferably contains graft copolymer particles that are water insoluble and have a particle size of from 60 nm to 500 nm, and more preferably from 80 nm to 350 nm.

The graft copolymer formed preferably has a backbone containing second ethylenically unsaturated monomer residues from the monomer composition and one or more macromonomer units, wherein a terminal ethylenically unsaturated group of the macromonomer is incorporated into the backbone and the remainder of the macromonomer is a graft segment pendant to the backbone. The degree of polymerization of the graft segments derived from the macromonomer is preferably from 10 to 1,000, more preferably from 20 to 1,000, and most preferably from 20 to 200. The weight average molecular weight of the graft copolymer is preferably in the range of from 50,000 to 2,000,000, and more preferably from 100,000 to 1,000,000. The number average molecular weights of the comb copolymers of the present invention preferably are from 25,000 to 600,000. Molecular weights are determined by size exclusion chromatography (SEC), i.e., gel permeation chromatography (GPC).

In a preferred embodiment of this invention, formation of macromonomer in an aqueous emulsion polymerization, and polymerization with the second ethylenically unsaturated monomer in an emulsion, are conducted in a single vessel. For example, in the first stage, the macromonomer aqueous emulsion is formed, and then a second emulsion polymerization is performed in the same vessel to polymerize the macromonomer with at least one second ethylenically unsaturated monomer, e.g., by directly adding (all at once or by a gradual feed) the monomer composition and initiator to the macromonomer aqueous emulsion. An advantage of this method is that the macromonomer need not be isolated. The particle size and particle size distribution of the water insoluble macromonomer particles may be precisely controlled, and later addition of more macromonomer aqueous emulsion would typically not be required.

In another preferred embodiment of the present invention, the polymerization of the macromonomer and second ethylenically unsaturated monomer is performed in the presence of an acid-containing monomer, acid-containing macromonomer, or combinations thereof. The acid-containing monomer or acid-containing macromonomer may be added in any manner to the polymerization reaction mixture, but preferably, it is present in the monomer composition. The amount of acid-containing monomer or acid-containing macromonomer added to the polymerization reaction mixture is typically from 0 to 10%, preferably from 0.2% to 10%, more preferably from 0.5% to 5%, and most preferably from 1% to 2%, based on the total weight of monomer and macromonomer. Acid containing monomers useful in this embodiment include ethylenically unsaturated monomers bearing acid functional or acid forming groups as described herein. The "acid containing macromonomer" of this embodiment is a macromer formed from at least one kind of acid containing monomer, and capable of being polymerized in a free radical polymerization process. Preferably, the acid containing macromonomer has from 50% to 100%, more preferably from 90% to 100%, and most preferably from 95% to 100% of acidic monomer residues. In a preferred embodiment, the acid-containing macromonomer is prepared by a solution polymerization process using a free radical initiator and transition metal chelate complex, as disclosed in, for example, US-A-5,721,330.

The essentially linear backbone of the comb copolymer contains polymerized units of the second ethylenically unsaturated monomer, together with polymerized units of the terminal monomer from the macromonomer. The backbone optionally is cross-linked, e.g., by incorporation of monomers that are at least difunctional. Preferably, the backbone contains less than 1% of monomer residues derived either from a monomer which is a diene monomer, or from any other monomer which is at least difunctional with regard to an addition polymerization. In larger amounts, such monomers, e.g., butadiene, isoprene, divinylbenzene, di- or tri-(meth)acrylates, and allyl (meth)acrylates, typically produce a substantially crosslinked polymer. More preferably, the backbone contains less than 0.5% of such monomer residues, more preferably less than 0.1%, and most preferably, the backbone is substantially free of such monomer residues. The substantial absence of crosslinking in the linear backbone of the comb copolymers used in this invention makes the comb copolymers different from prior art core/shell polymers, which have a "rubbery" core. The presence of a crosslinked network typically is considered a necessary condition for the existence of rubber-like elasticity. Another significant difference between the comb copolymers and core/shell polymers is that the comb copolymers are grafted at a molecular level, i.e., each polymer molecule has a backbone and graft chains. In contrast, the core/shell polymers have a core consisting of multiple cross-linked chains of one type, and a shell consisting of another type of chain grafted onto the periphery of the core.

Preferably, at least 20% of the monomer residues in the comb copolymer are meth(acrylate) residues, more preferably at least 50%, more preferably at least 90%, more preferably at least 95%, and most preferably, substantially all of the monomer residues in the comb copolymer are (meth)acrylate residues. Preferably, at least 50% of the monomer residues in the backbone are meth(acrylate) residues, more preferably at least 90%, more preferably at least 95%, and most preferably, substantially all of the monomer residues in the backbone are (meth)acrylate residues. Preferably, at least 50% of the monomer residues in the graft segments are meth(acrylate) residues, more preferably at least 90%, more preferably at least 95%, and most preferably, substantially all of the monomer residues in the graft segments are (meth)acrylate residues. Preferably, at least 50% of the monomer residues in the backbone are residues of C₈ to C₁₈ alkyl esters of (meth)acrylic acid, more preferably at least 80%, more preferably at least 90%, and most preferably at least 95%.

The weight ratio of the graft segment of the comb copolymer to the backbone of the comb copolymer is preferably 10:90 to 60:40, more preferably 15:85 to 50:50, and most preferably 20:80 to 40:60. In one embodiment, the Tg of the backbone of the comb copolymer is from -80°C to 0°C, more preferably from -65°C to -20°C, and most preferably from -65°C to -40°C. In another embodiment, the Tg of the graft segments is from -80°C to 0°C, more preferably from -65°C to -20°C, and most preferably from -65°C to -40°C.

Comb copolymers are incorporated into asphalts by mixing the polymers, either in the solid or latex form, into asphalt at high temperatures, typically from 100°C to 250°C. Preferably, the polymers do not separate from the asphalt as a separate phase on cooling. Preferably, the amount of comb copolymer incorporated into the asphalt is from 1% to 4%.

Viscoelastic properties of asphalt which are improved by incorporation of comb copolymers include elevated temperature properties such as the complex modulus, phase angle and stiffness when measured by dynamic shear rheology; low temperature properties such as creep stiffness and stress relaxation rate when measured by bending beam rheology and low temperature ultimate tensile strain when measured by direct tension testing.

Preferably, the comb copolymer contains functional groups capable of reacting with functional groups in the asphalt. Examples of functional groups present in asphalt include polysulfides, sulfides, thiols, thiophenes, pyridine- and pyrrole-type nitrogens, porphyrins, carbazoles, carboxylic acids, naphthenic acids, phenols, ketones, esters, ethers and anhydrides.

Preferably, the comb copolymer contains functional groups that impart anti-strip properties to the polymer-modified asphalt, including, but not limited to amino, substituted amino, amido, substituted amido and phosphonate ester groups. Substitution on the aforementioned groups preferably is by alkyl groups.

### Examples

### Example 1: Asphalt Solubility Testing

Polymer solubility in asphalt is difficult to observe directly due to the dark color and semi-solid consistency of asphalt. A solvent screening test was implemented to assess polymer compatibility, using two solvents: (i) xylene to mimic the asphaltene fraction; and (ii) 2:1, hexane:xylene to mimic the maltene fraction. Table 1 summarizes solubility observations for a number of comb copolymers tested at 5% in these solvents at room temperature. Table 1 lists the % backbone relative to the entire comb copolymer, its composition, the % and composition ("cmp") of each type of graft chain, and solubility observations.

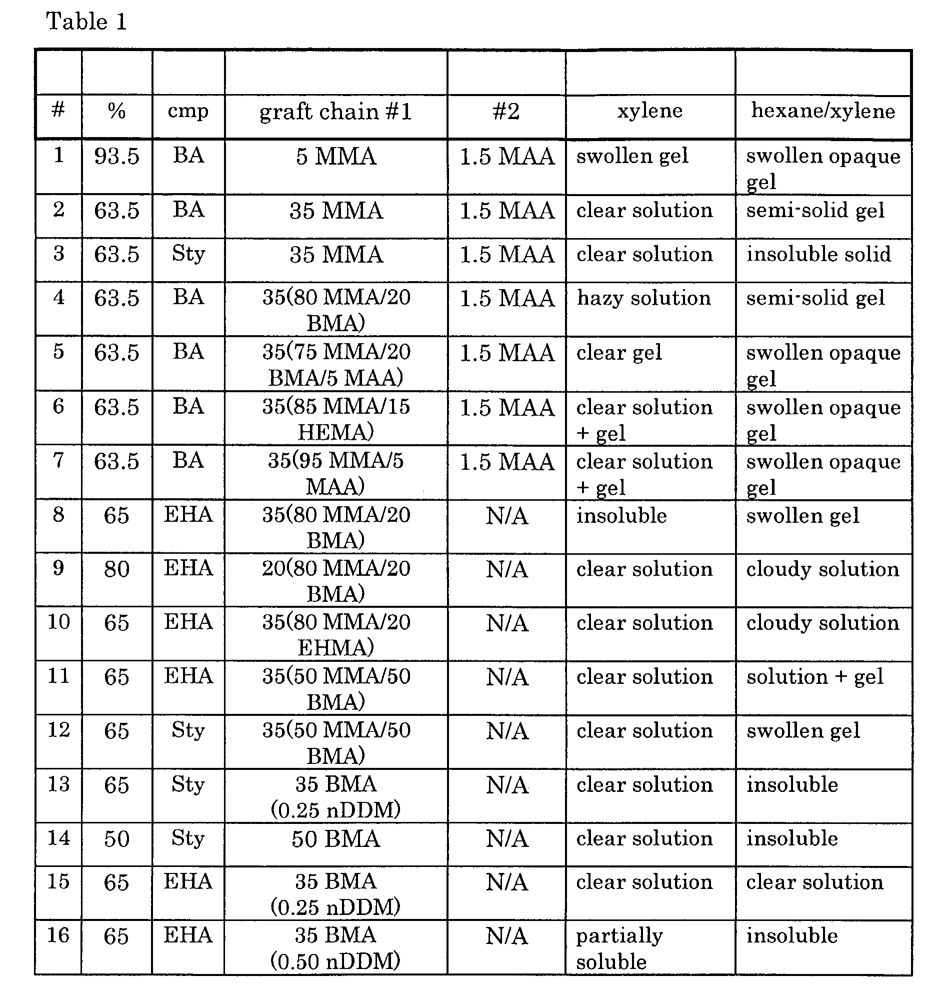

BA=n-butyl acrylate; MMA=methyl methacrylate; MAA=methacrylic acid; Sty=styrene; BMA=n-butyl methacrylate; HEMA=2-hydroxyethyl methacrylate; EHA=2-ethylhexyl acrylate; EHMA=2-ethylhexyl methacrylate

nDDM=n-dodecyl mercaptan, utilized as a chain transfer agent during polymerization

Samples 11, 15 and 16 were tested for solubility in asphalt and found to be readily soluble at 4% after heating for 2 hours at 175-190°C

### Example 2: Asphalt Testing

The acrylic comb polymers were evaluated as polymer modifiers for asphalt cement utilizing the Superpave Asphalt Binder Specification tests (AASHTO MP1-93) described in Hot Mix Asphalt Materials, Mixture Design and Construction, Chapter 2, NAPA Research and Education Foundation, Second Edition, 1996. The acrylic comb polymer samples were added at a 2% level to a (nominal) PG 58-28 asphalt cement binder at 165°C and mixed for two hours prior to testing.

Table 2 below summarizes the PG (performance grade) ratings for the Maximum Pavement Design Temperature and Minimum Pavement Design Temperature that were obtained by means of the AASHTO MP1-93 test procedures. Sample numbers correspond to those in Table 1.

**Table 2**

| Sample No. | Comb Polymer Composition | | Pavement Design Temperature (°C) | |
|---|---|---|---|---|
| | Backbone | Graft Chains | Maximum | Minimum |
| 11 | 65 EHA | 35 (50BMA/50MMA) | 64.1 | -28.1 |
| 13 | 65 Sty | 35(BMA//0.25 nDDM) | 63.6 | Not tested |
| 14 | 50 Sty | 50 BMA | 66.8 | Not tested |
| 15 | 65 EHA | 35 (BMA//0.25 nDDM) | 62.7 | -29.4 |
| 16 | 65 EHA | 35 (BMA//0.50 nDDM) | 62.1 | Not tested |

## Claims

1. A polymer-modified asphalt comprising from 0.5% to 10% of a comb copolymer comprising a backbone and at least one graft segment.

2. The polymer-modified asphalt of claim 1 in which at least 50% of monomer residues in the comb copolymer are (meth)acrylate residues.

3. The polymer-modified asphalt of claim 2 in which at least 50% of monomer residues in said at least one graft segment are (meth)acrylate residues.

4. The polymer-modified asphalt of claim 2 in which at least 80% of monomer residues in the backbone are residues of C₈ to C₁₈ alkyl esters of (meth)acrylic acid.

5. The polymer-modified asphalt of claim 4 in which the backbone is substantially free of monomer residues of monomers which are at least difunctional with regard to an addition polymerization.

6. The polymer-modified asphalt of claim 2 in which the comb copolymer contains functional groups capable of reacting with functional groups in the asphalt.

7. The polymer-modified asphalt of claim 2 in which the comb copolymer contains functional groups that impart anti-strip properties to the polymer-modified asphalt.

8. A method for improving the viscoelastic properties of asphalt; said method comprising incorporating into asphalt from 0.5% to 10% of a comb copolymer comprising a backbone and at least one graft segment.

9. The method of claim 8 in which at least 50% of monomer residues in the comb copolymer are (meth)acrylate residues and the backbone is substantially free of monomer residues of monomers which are at least difunctional with regard to an addition polymerization.

10. The method of claim 9 in which the comb copolymer contains functional groups capable of reacting with functional groups in the asphalt.
